# EUROPÄISCHE PATENTSCHRIFT

(11) **EP 2 127 294 B1**
(45) Veröffentlichungstag und Bekanntmachung des Hinweises auf die Patenterteilung: **25.02.2015**
(21) Anmeldenummer: 07856753.4
(22) Anmeldetag: 14.12.2007
(51) Int. Cl.: H04L 29/06, G06F 21/44, G06F 21/77, H04W 12/06, H04W 92/10, H04W 88/02

(54) **Authentisierung portabler Datenträger**
Authentication of portable data carriers
Authentification de supports de données portables

(30) Priorität: 22.12.2006 DE 102006061338
(43) Veröffentlichungstag der Anmeldung: 02.12.2009
(73) Patentinhaber: Giesecke & Devrient GmbH, 81677 München (DE); Vodafone D2 GmbH, 40547 Düsseldorf (DE)
(72) Erfinder: HOFFMANN, Lars, 80639 München (DE); RÜDINGER, Jens, 40547 Düsseldorf (DE)
(86) Internationale Anmeldenummer: PCT/EP2007/011015
(87) Internationale Veröffentlichungsnummer: WO 2008/077514

(56) Entgegenhaltungen:
- EP-A- 0 973 134
- DE-A1- 10 251 265
- DE-A1- 19 818 830
- US-A1- 2004 015 692

## Beschreibung

Die Erfindung betrifft ein Verfahren zum Authentisieren eines portablen Datenträgers, beispielsweise einer (U)SIM-Karte, gegenüber einer Kommunikationsvorrichtung, beispielsweise in einem Mobilfunknetz, sowie einen entsprechend eingerichteten portablen Datenträger.

Ein portabler Datenträger authentisiert sich im Allgemeinen gegenüber einer Kommunikationsvorrichtung, indem er der Kommunikationsvorrichtung auf eine von dieser gestellten Authentisierungsanfrage eine geeignete Antwort zurücksendet, anhand derer die Vorrichtung die Identität des portablen Datenträgers prüfen kann. In praktischen Anwendungen, beispielsweise beim Authentisieren einer SIM-Karte gegenüber einem Mobilfunknetz, umfasst die Authentisierungsanfrage an den portablen Datenträger eine zufällige Zeichenfolge. Als Antwort sendet der Datenträger eine Antwortzeichenfolge zurück, die verschlüsselt ist und sich aus der Berechnung einer kryptographischen Funktion ergibt, die als Eingabe die zufällige Zeichenfolge und einen geheimen, nur dem Datenträger und dem System bekannten Schlüssel umfasst. Die Kommunikationsvorrichtung führt intern dieselbe Berechnung durch. Dies ist möglich, da der Vorrichtung sowohl die kryptographische Funktion als auch die von ihr erzeugte zufällige Zeichenfolge und insbesondere der geheime Schlüssel bekannt sind. Schließlich vergleicht die Kommunikationsvorrichtung die selbst errechnete Zeichenfolge mit der empfangenen Antwortzeichenfolge des portablen Datenträgers. Sind die beiden Zeichenfolgen gleich, so sieht die Kommunikationsvorrichtung den Datenträger als korrekt authentisiert an.

Ein korrektes Authentisieren gegenüber der Kommunikationsvorrichtung unter der Identität des portablen Datenträgers ist also nur mit Kenntnis des geheimen Schlüssels möglich, der zu keiner Zeit im Klartext übertragen wird, im Gegensatz zu der zufälligen Zeichenfolge. Auch die kryptographische Funktion kann bekannt sein.

Indem sie sich gegenüber dem Datenträger als Kommunikationsvorrichtung ausgeben, versuchen Angriffe auf den Datenträger, deren Ziel es ist, den im Datenträger gespeicherten geheimen Schlüssel zu erlangen, durch das Senden zahlreicher Authentisierungsanfragen zu erreichen, dass der Datenträger auf jede dieser Anfragen mit der entsprechenden Antwortzeichenfolge antwortet, die den geheimen Schlüssel in verschlüsselter Form enthält. Anhand dieser großen Anzahl von Anfrage-Antwort-Paaren kann durch eine kryptographische oder technische Analyse der Schlüssel rekonstruiert werden.

Ein einfacher und leicht zu implementierender Schutzmechanismus gegen Angriffe dieser Art ist ein so genannter Authentisierungszähler. Dieser zählt alle im Laufe der Lebensdauer des portablen Datenträgers an diesen gestellte Authentisierungsanfragen. Übersteigt der Zählerstand des Zählers einen vorbestimmten Schwellenwert, so wird der Datenträger deaktiviert. Dabei ist es das Ziel, den Schwellenwert so einzustellen, dass er den normalen Betrieb des Datenträgers nicht beeinträchtigt, also diesen nicht vorzeitig ohne das Vorliegen eines Angriffs deaktiviert, gleichzeitig aber Schutz liefert gegenüber den vorstehend beschriebenen Angriffen. Zu diesem Zweck darf der Schwellenwert nicht zu hoch eingestellt sein, da die Angriffe um so gefährlicher sind, je mehr vorgetäuschte Authentisierungsanfragen von dem portablen Datenträger beantwortet werden. Aus Sicherheitsaspekten ist demnach ein relativ niedrig eingestellter Schwellenwert wünschenswert.

Aufgrund der langen Lebensdauer mancher portabler Datenträger, welche eine sehr große Anzahl von Authentisierungen nach sich zieht, und aufgrund neuer Anwendungen, beispielsweise in der Telematik, welche ebenfalls eine sehr große Anzahl von regulären Authentisierungen des portablen Datenträgers gegenüber einer Kommunikationsvorrichtung erfordern, ist die Anwendung eines Authentisierungszählers als Schutzmechanismus gegen vorstehend beschriebene Angriffe weniger sinnvoll und möglich. Ein niedrigges Einstellen des Authentisierungszählers, welches aus Sicherheitsgesichtspunkten angeraten scheint, ist in der Praxis nicht möglich, da es regelmäßig zu einem vorzeitigen unnötigen Deaktivieren eines portablen Datenträgers mit einer großen Anzahl von im Laufe seiner Lebensdauer auszuführenden Authentisierungen führte, ohne dass ein Angriff vorläge.

Gemäß US 2004/0015692 wird eine gegenseitige Authentisierung zwischen Datenträger und Kommunikationsvorrichtung vorgeschlagen, wobei sich die Kommunikationsvorrichtung mittels eines Zertifikats (innerhalb eines Zufallsstrings) bei dem Datenträger authentisiert. Es wird also eine Identifikationsinformation verwendet, um die Anfrage bezüglich ihrer Vertrauenswürdigkeit zu bewerten.

Demgemäß ist es die Aufgabe der vorliegenden Erfindung, ein Verfahren zum Authentisieren eines portablen Datenträgers gegenüber einer Kommunikationsvorrichtung bereitzustellen, welches eine große Anzahl von Authentisierungen im normalen Betrieb erlaubt und gleichzeitig Angriffe auf den Datenträger verhindert.

Diese Aufgabe wird durch ein Verfahren und einen dazu eingerichteten portablen Datenträger mit der Merkmalen der unabhängigen Ansprüche gelöst. In den davon abhängigen Ansprüchen werden vorteilhafte Ausgestaltungen und Weiterbildungen der Erfindung beschrieben.

Erfindungsgemäß empfängt ein portabler Datenträger eine Authentisierungsanfrage einer Kommunikadonsvorrichtung als von der Kommunikationsvorrichtung gesendetes Kommando. Der Datenträger bewertet die Authentisierungsanfrage auf Vertrauenswürdigkeit, d.h. er prüft, ob die Authentisierungsanfrage ein Angriffsversuch ist, und weist die Authentisierungsanfrage ab, falls diese von dem Datenträger als nicht vertrauenswürdig, d.h. als Angriff auf die Integrität des Datenträgers, bewertet wird. Andernfalls, wenn der Datenträger die Authentisierungsanfrage einer berechtigten Instanz zuordnet, sendet der Datenträger eine Authentisierungsantwort auf die Authentisierungsanfrage an die Kommunikationsvorrichtung. Dabei wird die Vertrauenswürdigkeit der Authentisierungsanfrage anhand einer aus von dem Datenträger empfangenen Kommandos abgeleiteten Relationsinformation und/oder einer von dem Datenträger empfangenen Identifikationsinformation der Kommunikationsvorrichtung bewertet.

Im Folgenden wird unter der Identifikationsinformation eine Information verstanden, die dem Datenträger ermöglicht, seinerseits den Absender der Authentisierungsanfrage zu identifizieren. Die Identifikation wird als erfolgreich bezeichnet, wenn der Datenträger eine ihm bekannte Kommunikationsvorrichtung identifizieren konnte. Die Möglichkeit, die Kommunikationsvorrichtung zu identifizieren, die eine Authentisierungsanfrage gesendet hat, stellt einen wichtigen Beitrag bei der Prüfung der Vertrauenswürdigkeit der Authentisierungsanfrage dar, denn nur eine Authentisierungsanfrage von einer nicht identifizierbaren, d.h. dem Datenträger unbekannten Kommunikationsvorrichtung, kann einen potentiellen Angriffsversuch darstellen.

Die Identifikation der Kommunikationsvorrichtung gegenüber dem Datenträger durch eine aus der Authentisierungsanfrage extrahierte Identifikationsinformation repräsentiert somit einen Teilschritt der Authentisierung des Datenträgers gegenüber der Kommunikationsvorrichtung, die mit der Authentisierungsanfrage der Kommunikationsvorrichtung eingeleitet wird und mit der Authentisierungsantwort des Datenträgers an die Kommunikationsvorrichtung abgeschlossen wird.

Jedoch ist die Authentisierung des Datenträgers gegenüber der Kommunikationsvorrichtung auch ohne den Identifikationsschritt denkbar, wenn z.B. die Authentisierungsanfrage keine Identifikationsinformation umfasst.

Die Relationsinformation ermöglicht es dem Datenträger, eine Bewertung der Authentisierungsanfrage auf Vertrauenswürdigkeit vorzunehmen, indem zusätzliche Informationen, die über die Anzahl von an den Datenträger gestellten Authentisierungsanfragen hinausgehen, in die Bewertung miteinbezogen werden. In die Relationsinformation geht also eine Anfrageinformation ein, die Kennwerte der vergangenen Kommunikation zwischen Datenträger und Kommunikationsvorrichtung repräsentiert, auf deren Basis eine möglichst valide Statistik erstellt wird, um die Vertrauenswürdigkeit der Kommunikationsvorrichtung abzuschätzen.

Der erfindungsgemäße Datenträger umfasst demgemäß eine Kommunikationsschnittstelle, über die Authentisierungsanfragen und andere Kommandos von dem Datenträger empfangen werden, einen Speicher zum Speichern von Daten und eine Bewertungseinrichtung, die eingerichtet ist, eine Vertrauenswürdigkeit von empfangenen Authentisierungsanfragen zu bewerten sowie die Autheritisierungsanfrage abzuweisen, falls diese als nicht vertrauenswürdig bewertet wird, und anderenfalls eine Authentisierungsantwort auf die Authentisierungsanfrage an die Kommunikationsvorrichtung zu senden.

Die von dem Datenträger in Reaktion auf eine Authentisierungsanfrage von einer vertrauenswürdigen Kommunikationsvorrichtung gesendete Authentisierungsantwort ermöglicht es der Kommunikationsvorrichtung, den Datenträger als den Absender dieser Antwort zu authentisieren und dann eine Kommunikationsverbindung zu etablieren. In dem Fall, in dem die Authentisierungsanfrage durch den Datenträger aufgrund der Bewertung der Authentisierungsanfrage als nicht vertrauenswürdig abgewiesen wird, kann dieses Abweisen beispielsweise in einem Verweigern einer Authentisierungsantwort bestehen oder in dem Senden einer Antwort, anhand derer der Datenträger von dem Absender der Authentisierungsanfrage nicht authentisiert werden kann.

Bevorzugt wird die Identifikationsinformation durch den Datenträger aus der empfangenen Authentisierungsanfrage extrahiert. Anhand der extrahierten Identifikationsinformation erfolgt dann die Identifikation des Absenders der Authentisierungsanfrage. Die Identifikationsinformation kann ein dem Datenträger und der Kommunikationsvorrichtung gemeinsam bekanntes Geheimnis, vorzugsweise in verschlüsselter Form, enthalten. Durch Extrahieren der Identifikationsinformation aus der Authentisierungsanfrage kann der Datenträger erkennen, dass die Kommunikationsvorrichtung im Besitz des gemeinsamen Geheimnisses und darüber identifizierbar ist.

Zum Bilden der Relationsinformation sammelt die Bewertungseinrichtung im Laufe des Einsatzes des Datenträgers Anfrageinformation, die bestimmte statistische Informationen über die empfangenen Kommandos betrifft. Die Anfrageinformation wird im Speicher des Datenträgers abgelegt, um bei der Bewertung einer aktuellen Authentisierungsanfrage ausgelesen und geeignet verwendet zu werden, z.B. um Relationsinformation zu bilden.

In die Relationsinformation geht als Anfrageinformation die Anzahl derjenigen Authentisierungsanfragen ein, bei denen das Prüfen der Identität der Kommunikationsvorrichtung ergeben hat, dass diese über keine dem Datenträger bekannte Identität verfügt. Eine solche Information erlaubt es dem Datenträger beispielsweise, als Anfrageinformation einen so genannten Identifikationsfehlerzähler zu implementieren, der die vorstehend definierte Anzahl zählt. Im Gegensatz zu einem im Stand der Technik bekannten Authentisierungszähler, der alle von einem Datenträger empfangenen Authentisierungsanfragen unabhängig von der Identität der Kommunikationsvorrichtung zählt, ermöglicht der Identifikationsfehlerzähler dem Datenträger, einen potentiellen Angriff schon nach wenigen vorgetäuschten Authentisierungsanfragen zu erkennen. Gleichzeitig kann der Datenträger eine beliebig hohe Anzahl von regulären Authentisierungsanfragen, also solchen, die er von einer erfolgreich identifizierten Kommunikationsvorrichtung empfängt, behandeln und ist im normalen Betrieb nicht eingeschränkt.

Vorzugsweise schreibt die Bewertungseinrichtung die Anfrageinformation in den Speicher des Datenträgers, wobei die Anfrageinformation Daten enthält, die die von dem Datenträger empfangenen Kommandos betreffen. Die Bewertungseinrichtung leitet aus dieser Anfrageinformation Relationsinformation ab, anhand derer die Vertrauenswürdigkeit der betreffenden Kommunikationsvorrichtung bewertet wird. Durch das Speichern dieser Anfrageinformation wird es dem Datenträger ermöglicht, zur Bewertung der Vertrauenswürdigkeit einer aktuellen Authentisierungsanfrage nicht immer nur Information über genau diese Anfrage auszuwerten, sondern darüber hinaus Informationen über vorangegangene Authentisierungsanfragen in das Ableiten der Relationsinformation eingehen zu lassen. Die Anfrageinformation kann also beispielsweise die vorstehend erwähnte Anzahl von von dem Datenträger empfangenen Authentisierungsanfragen enthalten, deren Absender nicht als eine dem Datenträger bekannte Kommunikationsvorrichtung identifiziert werden konnte.

Vorzugsweise geht in die Relationsinformation auch eine, möglicherweise zuvor als Anfrageinformation erhobene, zeitliche Information ein. Dazu umfasst der Datenträger eine Zeitmesseinrichtung zum Messen von Zeitpunkten und Zeitspannen und die Bewertungseinrichtung speichert eine von der Zeitmesseinrichtung gemessene zeitliche, Authentisierungsanfragen betreffende Informationen als Anfrageinformation in dem Speicher. Die Bewertungseinrichtung leitet dann die Relationsinformation aus dieser zeitlichen Anfrageinformation ab. Die Relationsinformation kann beispielsweise ein Zeitintervall im Verhältnis zu den in diesem Zeitintervall von dem Datenträger empfangenen Authentisierungsanfragen repräsentieren, also beispielsweise den Zeitraum zwischen zwei aufeinander folgend an den Datenträger gestellten Authentisierungsanfragen. Als Relationsinformation kann auch eine Anzahl der von dem Datenträger empfangenen Authentisierungsanfragen im Verhältnis zu einem vorgegebenen Zeitintervall bestimmt werden, also beispielsweise die Anzahl der Authentisierungsanfragen, die der Datenträger während eines absoluten oder relativen Zeitintervalls empfangen hat.

Je größer die Anzahl der in einem bestimmten Zeitintervall empfangenen Authentisierungsanfragen ist, desto größer ist die Wahrscheinlichkeit, dass ein Angriff vorliegt und demzufolge die aktuell zu bewertende Authentisierungsanfrage nicht vertrauenswürdig ist.

Die Relationsinformation eine Information umfasst, die diejenigen von dem portablen Datenträger über die Kommunikationseinrichtung empfangenen Kommandos betrifft, die keine Authentisierungsanfragen waren. Dazu ist die Bewertungseinrichtung eingerichtet, diese Information als Anfrageinformation zu speichern und daraus Relationsinformation abzuleiten. Beispielsweise kann die Relationsinformation ein Verhältnis von von dem Datenträger empfangenen Kommandos, die keine Authentisierungsanfragen waren, zu der Anzahl der empfangenen Authentisierungsanfragen betreffen oder die Anzahl von direkt nacheinander von dem Datenträger empfangenen Authentisierungsanfragen, ohne dass dazwischen ein anderes Kommando empfangen worden ist.

Aus der Kenntnis des im normalen Betrieb auftretenden Verhältnisses von Authentisierungsanfragen zu sonstigen Kommandos kann bei einem Anstieg des Anteils der Authentisierungsanfragen oder bei einer Folgen von Authentisierungsanfragen, die nicht durch andere Kommandos unterbrochen ist, mit hoher Wahrscheinlichkeit von einem Angriff auf den Datenträger ausgegangen werden.

Nachfolgend wird die Erfindung anhand der begleitenden Zeichnungen beispielhaft beschrieben. Darin zeigen:
- Figur 1: ein Flussdiagramm eines erfindungsgemäßen Authentisierungsverfahrens zum Authentisieren eines portablen Datenträgers gegenüber einer Kommunikationsvorrichtung; und
- Figur 2: eine Ausführungsform eines erfindungsgemäßen Datenträgers.

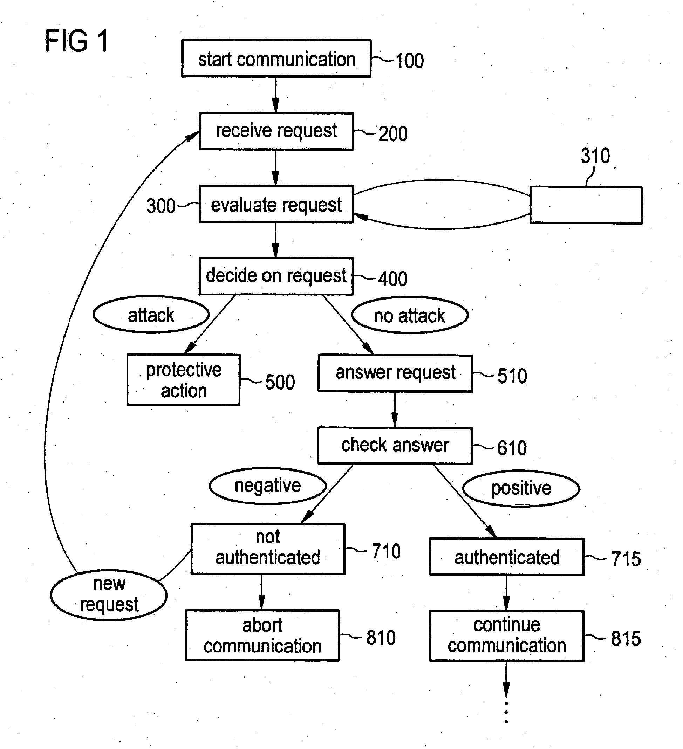

Mit Bezug auf Figur 1 nimmt in Schritt 100 ein portabler Datenträger Kontakt mit einer Kommunikationsvorrichtung auf ("start communication"). Die Kontaktaufnahme erfolgt beispielsweise, indem der Datenträger der Kommunikationsvorrichtung durch Senden von Erkennungsdaten seine Kommunikationsbereitschaft signalisiert. Handelt es sich bei dem Datenträger beispielsweise um eine SIM-Mobilfunkkarte und bei der Kommunikationvorrichtung um eine Basisstation eines Mobilfunknetzes, so erfolgt die Kontaktaufnahme im Allgemeinen dadurch, dass die SIM-Karte ein TMSI-Signal ("Temporary Mobile Subscriber Identity") zusammen mit einem LAI-Signal ("Local Area Information") an die Basisstation sendet. Aus einer Kombination dieser beiden Datensätze kann das Mobilfunknetz die SIM-Karte eindeutig identifizieren.

Im Schritt 200 empfängt der portable Datenträger eine Authentisierungsanfrage von der Kommunikationsvorrichtung ("receive request"). Damit wird überprüft, ob der Datenträger tatsächlich die in Schritt 100 behauptete Identität besitzt. Die Authentisierungsanfrage ist von dem portablen Datenträger zu beantworten, wobei die Kommunikationsvorrichtung eingerichtet ist, anhand der Antwort die Identität des portablen Datenträgers zu überprüfen. Im Fall der SIM-Karte und der Basisstation des Mobilfunknetzes beispielsweise sendet das Mobilfunknetz über die Basisstation eine Zufallszahl RAND an die SIM-Karte. Die SIM-Karte sendet, wenn sie auf die Authentisierungsanfrage antwortet, eine Authentisierungsantwort SRES ("signed response") an die Basisstation des Mobilfunknetzes zurück.

Die Entscheidung, ob und aufgrund welcher Informationen der portable Datenträger erfindungsgemäß antwortet, beispielsweise hier die SIM-Karte, wird nachfolgend mit Bezug auf die Schritte 300 bis 510 beschrieben. Dabei ergibt sich die Authentisierungsantwort SRES aus einer Anwendung eines kryptographischen Algorithmus, des so genannten A3-Algorithmus, auf die Zufallszahl RAND in Verbindung mit einem SIM-Karten-individuellen Schlüssel Kᵢ. Da auf der Seite des Mobilfunknetzes aus den Erkennungsdaten TMSI und LAI der Schlüssel Kᵢ. errechnet werden kann, wird dort selbst eine erwartete Authentisierungsantwort SRES' gebildet, indem A3 auf RAND in Verbindung mit Kᵢ angewendet wird. Sind SRES und SRES' gleich, so ist die SIM-Karte über die Basisstation gegenüber dem Mobilfunknetz authentisiert.

Im Rahmen der Erfindung können auch andersartige Authentisierungsanfragen vorgesehen sein, beispielsweise umfasst in einem Mobilfunksystemen der dritten Generation, z.B. dem UMTS System, die Authentisierungsanfrage einen Anteil, der es ermöglicht, dass auch das Mobilfunknetz gegenüber der USIM-Karte eindeutig und mit Sicherheit identifiziert werden kann, und sich nicht nur die USIM-Karte über eine Basisstation gegenüber dem Mobilfunknetz authentisiert. Dies geschieht dadurch, dass ein als Authentisierungsanfrage an die USIM-Karte gesendeter Authentisierungsvektor AV einen Abschnitt AUTN besitzt, der als Authentisierungstoken bezeichnet wird. Dieser Abschnitt AUTN umfasst als Identifikationsinformation unter anderem einen Anteil MAC ("message authentification code"), der von einer Einrichtung des Mobilfunknetz mittels einer kryptographischen Funktion f1 gebildet wird, wobei f1 als Eingabe einen gemeinsam von der USIM-Karte und dem Mobilfunknetz vereinbarten Schlüssen K umfasst. Die USIM-Karte kann nach Erhalt des Authentisierungsvektors AV nun selbst, in Kenntnis von f1 und K, einen Wert MAC' errechnen und vergleichen, ob MAC gleich MAC' ist. Im Falle der Gleichheit kann die USIM-Karte sicher sein, dass die empfangene Authentisierungsanfrage von einer Vorrichtung gesendet wurde, die im Besitz des geheimen Schlüssels K ist, also mit sehr hoher Wahrscheinlichkeit von einer Basisstation des gewünschten Mobilfunknetzes.

Eine analoge Vorgehensweise kann auch in Mobilfunknetzen der zweiten Generation, beispielsweise dem GSM-System, wie folgt vorgesehen sein. Anstatt als Authentisierungsanfrage eine reine Zufallszahl RAND, beispielsweise mit einer Länge von 128 Bit, sendet eine Basisstation des Mobilfunknetz eine Zahl, die sich zusammensetzt aus einer Zufallszahl RAND', die einige Bits weniger besitzt als RAND, beispielsweise 120 Bits. Die verbleibenden Bits, also z.B. 8, werden durch eine Zahl, MAC", gefüllt, die die Funktion des vorstehend beschriebenen MAC erfüllt. MAC" wird gebildet mittels einer kryptographischen Funktion, die sowohl der SIM-Karte als auch seitens des Mobilfunknetzes bekannt ist, also beispielsweise A3. Aber auch andere geeignete Funktionen, beispielsweise eine Hash-Funktion, sind einsetzbar. Als Eingabe für die kryptographische Funktion dienen RAND' und Kᵢ. Analog zum vorstehend beschriebenen Authentisierungsprozess im UMTS-System kann nun die SIM-Karte das Mobilfunksystem nach Erhalt der Authentisierungsanfrage (RAND', MAC") durch Auswerten der in der Authentisierungsanfrage enthaltenen Identifikationsinformation MAC" identifizieren, indem sie selbst mittels der kryptographischen Funktion, abhängig von RAND' und Ki, eine Berechnung einer Zahl MAC'" durchführt und vergleicht, ob MAC" gleich MAC"' ist.

Eine derartige Vorgehensweise hat weiterhin den Vorteil, dass eine Umstellung von bisherigen Authentisierungsanfragen RAND zu (RAND', MAC") erfolgen kann, auch wenn noch SIM-Karten im Umlauf sind, die nicht für die Berechnung von MAC"' eingerichtet sind. Diese können die Authentisierungsanfrage (RAND', MAC") behandeln wie im Stand der Technik üblich, da sich an der Art und Weise, auf eine empfangene Authentisierungsanfrage zu antworten, nichts ändert. Für diese Karten ist eine Authentisierung des Mobilfunknetzes nicht möglich.

Im Schritt 300 bewertet der portable Datenträger die empfangene Authentisierungsanfrage auf Vertrauenswürdigkeit ("evaluate request"). Ziel dieser Auswertung ist, festzustellen, ob die Anfrage von der erwarteten Kommunikationsvorrichtung gesendet worden ist und somit dem normalen Betrieb dient oder ob es sich um einen Angriff auf den Datenträger handelt. Angriffe auf den Datenträger versuchen beispielsweise durch Vortäuschen einer großen Anzahl von Authentisierungsanfragen, auf die der Datenträger dann entsprechend antwortet, Informationen über den in dem Datenträger gespeicherten geheimen Schlüssen zu erlagen, indem sie die zahlreichen erhaltenen Anfrage-Antwort-Paare mittels kryptographischer oder technischer Analysen auswerten. Dazu dienen z.B. so genannter Seitenkanalangriffe, wie beispielsweise das Auswerten von Timing-Daten, Stromverbrauchsanalyse, durch äußere Einwirkung erzeugte Rechenfehler und dergleichen.

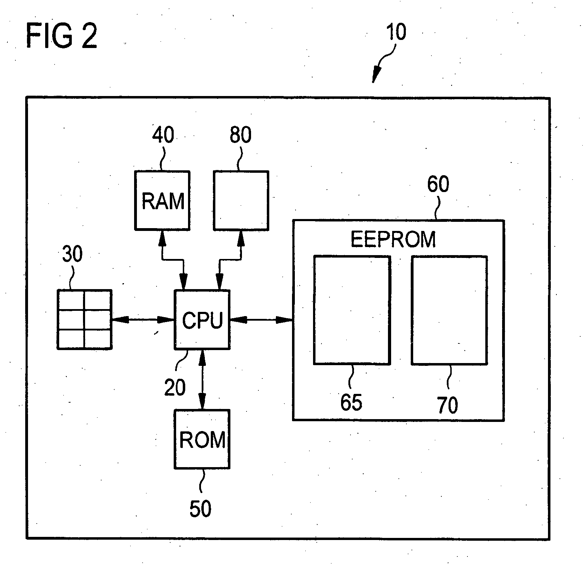

Mit Bezug auf Figur 2 umfasst eine bevorzugte Ausführungsform eines erfindungsgemäßen Datenträgers 10 eine CPU 20, die von einem in einem ROM-Speicher 50 eingebrannten Kern eines Betriebssystems gesteuert wird. Es können auch Datenträger eingesetzt werden, die zusätzlich zu der CPU 20 noch einen Koprozessor umfassen, beispielsweise zur Berechnung spezieller numerischer Aufgaben im Zusammenhang mit der Verschlüsselung von Daten. Eine Kommunikationsschnittstelle 30, ausgebildet als Kontaktschnittstelle, bietet die Möglichkeit zur kontaktbehafteten Kommunikation des Datenträgers mit einem Lesegerät. Auch eine Schnittstelle, die zur kontaktlosen Kommunikation eingerichtet ist, oder ein Datenträger, der beide Kommunikationsmodi unterstützt, liegen im Rahmen der Erfindung. Ein Arbeitsspeicher (RAM) 40 liefert schnell zugreifbaren, flüchtigen Speicher zum Durchführen von Zwischenberechnungen. Sein Inhalt wird bei unterbrochener Spannungsversorgung gelöscht.

In dem nichtflüchtigen, wieder beschreibbaren EEPROM-Speicher 60 sind die einer Bewertungseinrichtung 65 entsprechenden Softwarekomponenten gespeichert. Auf diese Weise ist ein Aktualisieren dieser Komponten jederzeit möglich, da der Speicher 60 wieder beschreibbar ist. Kommandos zum Aktualisieren der Bewertungseinrichtung 65 können über die Schnittstelle 30 in den Datenträger eingebracht werden und Aktualisierungsdaten unter Kontrolle des Betriebssystems in den Speicher 60 geschrieben werden. Alternativ können Teile oder die gesamten der Bewertungseinrichtung 65 entsprechenden Softwarekomponenten in dem ROM-Speicher 50 eingebrannt sein. Dadurch wird ein schnellerer Zugriff darauf ermöglicht, eine Änderung oder Aktualisierung entsprechender Teile ist dann jedoch während der Lebensdauer des Datenträgers nicht mehr möglich. Weiterhin können betriebssystemnahe Routinen und/oder Applikationssoftware in dem Speicher 60 gespeichert sein. Der Speicher 60 kann auch ein FLASH-Speicher oder ein sonstiger wieder beschreibbarer, nichtflüchtiger Speicher sein.

Die von der Bewertungseinrichtung 65 ermittelte Anfrageinformation und insbesondere die Daten, die mit Bezug auf Kommandos gesammelt werden, die verschieden von Authentisierungsanfragen sind, werden in einem Abschnitt 70 des Speichers 60 gespeichert. Alternativ kann auch ein separater wieder beschreibbarer nichtflüchtiger Speicher für diese Daten vorgesehen sein.

Eine Zeitmesseinrichtung 80, die als in einem Register gehaltener Zähler ausgebildet ist, kann Taktzyklen in Verbindung mit Authentisierungsanfragen zählen, beispielsweise die Anzahl von Taktzyklen zwischen je zwei Authentisierungsanfragen. Auf diese Weise kann die Bewertungseinrichtung Aussagen gewinnen über die Anzahl von Authentisierungsanfragen innerhalb gegebener Zeitintervalle. Anfrageinformation , die aus von der Zeitmesseinrichtung 80 gemessenen Werten abgeleitet wird, wird ebenso in den Anteil 70 des Speichers 60 geschrieben.

Die Bewertung der Vertrauenswürdigkeit selbst erfolgt in Schritt 310 mittel der Bewertungsseinrichtung 65 mit Zugriff auf den Speicher 60 des portablen Datenträgers 10. Die Bewertungsseinrichtung 65 ist vorzugsweise als eine Software-Komponente ausgebildet, die Teil eines Betriebssystems des Datenträgers 10 sein kann oder als System- oder Applikationsroutine vorliegt. Die Bewertungseinrichtung 65 kann nach Auslieferung des Datenträgers 10 an den Endkunden, beispielsweise über eine Luftschnittstelle (OTA; "over the air"), nachinstalliert oder aktualisiert werden. Der Speicher 60 ist eingerichtet, Anfrageinformation 70 zu speichern, die empfangene Kommandos, insbesondere Authentisierungsanfragen, betreffen. In dem Speicher 60 können somit auch Daten 70 gespeichert werden, die Kommandos betreffen, die verschieden von Authentisierungsanfragen sind. Die Bewertungseinrichtung 65 besitzt Lese- und Schreibberechtigung bezüglich des Speichers 60.

Des Weiteren kann in dem Datenträger 10 eine Zähleinrichtung vorgesehen sein, die eingerichtet ist, sämtliche an den Datenträger 10 gestellte Authentisierungsanfragen zu zählen. Der Zähler kann beispielsweise als separater Speicher oder als ein Register ausgebildet und mittels der Bewertungseinrichtung 65 des Datenträgers 10 über das Betriebssystem gesteuert werden.

Neben der aktuellen Authentisierungsanfrage werden in dem Speicher 60 gespeicherte Daten von der Bewertungseinrichtung 65, zuzüglich zu dem eventuell ausgelesenen Zählerstand der Zählereinrichtung, herangezogen, um die Authentisierungsanfrage auf Vertrauenswürdigkeit hin zu bewerten.

Sind die Authentisierungsanfragen derart, dass eine Identifikation der Kommunikationsvorrichtung ermöglicht wird, wie es vorstehend mit Bezug auf die Bestandteile MAC und MAC" der entsprechenden Authentisierungsanfragen beschrieben worden ist, so ist die Bewertungseinrichtung 65 eingerichtet, die zur Identifikation des Absenders benötigten Berechnungen durchzuführen. Dazu wird jeweils zuerst die Authentisierungsanfrage selbst in dem Speicher 60 gespeichert. Danach erfolgt die Extraktion der benötigten Bestandteile der Anfrage und die notwendige Berechnung wie vorstehend beschrieben. Erweist sich eine Identifikation als negativ, d.h. es gilt MAC * MAC' bzw. MAC" ≠ MAC"', so erhöht die Bewertungseinrichtung 65 einen im Speicher 60 eingerichteten Identifikationsfehlerzähler. Dieser Zähler ist dem nach dem Stand der Technik bekannten und mittels der Zähleinrichtung implementierbaren Authentisierungszähler überlegen, da der Identifikationsfehlerzähler nur fehlgeschlagene Identifikationen, also solche, in denen der Absender der Authentisierungsanfrage nicht als eine dem Datenträger bekannte Kommunikationsvorrichtung identifiziert werden konnte, zählt. Diese deuten jedoch auf einen Angriff auf den Datenträger 10 hin, da der Absender der Anfrage - mangels Kenntnis des Geheimnisses Kᵢ bzw. K - keine korrekte Authentisierungsanfrage senden kann. Mittels des Identifikationsfehlerzählers kann also schon nach sehr wenigen Angriffsversuchen ein Angriff auf den Datenträger 10 erkannt und abgewehrt werden. Dem Identifikationsfehlerzähler ist ein Schwellenwert zugeordnet. Übersteigt der Zähler diesen Schwellenwert, so führt dies zur Deaktivierung des Datenträgers oder ähnlichen, mit Bezug auf den Schritt 500 ("protective action") nachstehend beschriebenen Schutzmaßnahmen. Der Schwellenwert kann demgemäß sehr niedrig eingestellt werden, da der Zähler im normalen Betrieb, d.h. bei positiv verlaufenen Authentisierungen im Gegensatz zum gewöhnlichen Authentisierungszähler nicht inkrementiert wird.

Die Bewertung einer Authentisierungsanfrage auf Vertrauenswürdigkeit im Schritt 310 kann weiterhin mit Hilfe von Daten erfolgen, die mit Hilfe der Zeitmesseinrichtung 80 und mit Bezug auf Authentisierungsanfragen von der Bewertungseinrichtung 65 ermittelt und als Anfrageinformation 70 in dem Speicher 60 gespeichert wurden. Diese zeitbezogenen Daten in Verbindung mit Authentisierungsanfragen können beispielsweise mit Bezug auf Taktzyklen des Schaltkreises des Datenträgers 10 gemessen werden. Die Anfrageinformation 70 kann beispielsweise die Anzahl der Taktzyklen zwischen zwei Authentisierungsanfragen, die Anzahl der Authentisierungsanfragen in einem festen oder gleitenden Zeitintervall und dergleichen sein.

Aufgrund dieser Anfrageinformation 70 können dann in der Bewertungseinrichtung 65 ausgewertete Anfragen beurteilt werden, indem beispielsweise von einem Angriff auf den Datenträger 10 ausgegangen wird, wenn die zwischen zwei Authentisierungsanfragen verstrichene Zeit eine vorgegebene Zeitdauer unterschreitet, wenn innerhalb eines absoluten oder relativen Zeitintervalls eine vorgegebene Anzahl von Authentisierungsanfragen überschritten wird oder beim Vorliegen ähnlicher verdächtiger Daten.

Die Regeln, nach denen die Bewertungseinrichtung 65 die mit Hilfe der Zeitmesseinrichtung 80 ermittelten Daten bewertet, und die vorgegebenen Anzahlwerte, nach denen von einem Angriff ausgegangen wird, können entweder fest vorgegeben sein oder während der Lebensdauer des Datenträgers 10 aktualisierbar sein, beispielsweise über die Luftschnittstelle.

Mit Bezug auf Figur 1 kann das Bewerten der Authentisierungsanfragen auf Vertrauenswürdigkeit im Schritt 310 weiterhin mittels in dem Speicher 60 gespeicherter Daten 70 erfolgen, die Kommandos betreffen, die der Datenträger 10 über die Kommunikationsschnittstelle 30 empfangen hat und die verschieden sind von Authentisierungsanfragen. Die Bewertungseinrichtung 65 sammelt relevante Daten über solche Kommandos, speichert diese als Anfrageinformation 70 in dem Speicher 60 und leitet daraus in Verbindung mit bereits zuvor gespeicherter Anfrageinformation 70 Relationsinformation ab. Vornehmlich wird die Anzahl und die Reihenfolge solcher Kommandos in Bezug auf Authentisierungsanfragen gespeichert. Im Fall einer SIM-Karte können beispielsweise die von dem Mobilfunktelefon an die SIM-Karte gerichteten Kommandos in ihrer Anzahl und in ihrer zeitlichen Reihenfolge mit Bezug auf empfangene Authentisierungsanfragen als Anfrageinformation 70 in dem Speicher 60 gespeichert werden.

Die Bewertungseinrichtung 65 kann Regeln anwenden, um eine Authentisierungsanfrage auf Vertrauenswürdigkeit zu bewerten, die die Anzahl und zeitliche Reihenfolge des Ankommens von Authentisierungsanfragen in ein Verhältnis setzen zu entsprechenden Daten die übrigen Kommandos betreffend. Beispielsweise kann es als ein Angriff betrachtet werden, wenn eine vorbestimmte Anzahl von Authentisierungsanfragen direkt nacheinander eingehen, ohne dass der Datenträger 10 dazwischen ein anderes Kommando empfangen hat. Als Angriff kann ebenso angesehen werden, wenn das Gesamtverhältnis von Authentisierungsanfragen zu sonstigen, von dem Datenträger empfangenen Kommandos einen vorgegebenen Schwellenwert übersteigt oder ein ähnlicher oder der gleicher Schwellenwert bezüglich einer vordefinierten Anzahl von Kommandos überschritten wird, die zuletzt von dem Datenträger empfangen worden sind. Es kann natürlich weiterhin der gewöhnliche, vorstehend beschriebener Authentisierungszähler eingesetzt werden, um eine Gesamtanzahl von Authentisierungsanfragen zu begrenzen.

Auch die hier zum Einsatz kommenden Regeln und Schwellenwerte können fest vorgegeben, im Betrieb anpassbar und/oder nachträglich aktualisierbar ausgestaltet sein, beispielsweise über eine Luftschnittstelle. Geeignete, zuzulassende Verhältnisse von Authentisierungsanfragen zu sonstigen Kommandos können auf diese Weise als Relationsinformation flexibel verschiedenen Anforderungen angepasst werden, wobei einmal der Sicherheitsaspekt überwiegen kann, das andere mal die garantiert reibungslose Benutzung im normalen Betrieb.

Basierend auf der Bewertung einer Authentisierungsanfrage auf Vertrauenswürdigkeit in Schritt 310 wird in Schritt 400 entschieden, ob die Anfrage als ein Angriff oder eine zum normalen Betrieb gehörende Authentisierungsanfrage bewertet wird ("decide on request"). Abhängig von dieser Bewertung ergeben sich zwei verschiedene weitere Abläufe des Kommunikationsprozesses zwischen dem portablen Datenträger 10 und der Kommunikationsvorrichtung.

Bewertet die Bewertungseinrichtung 65 die Authentisierungsanfrage als einen Angriff, so wird der Datenträger 10 in Schritt 500 gegen weitere Angriffe mittels Schutzmaßnahmen geschützt ("protective action"). Im Fall der Authentisierungsanfragen, die dem Datenträger 10 eine Identifikation des Kommunikationssystems ermöglichen, ist prinzipiell jeder einzelne Angriff, ohne statistische Daten über vorangegangene Anfragen, als ein Angriff zu erkennen. Bei jedem dieser Angriffe wird, wie vorstehend beschrieben, der Identifikationsfehlerzähler inkrementiert. Für die als Angriff angesehenen Authentisierungsanfragen kann es ausreichend sein, die Antwort darauf zu verweigern, um dem potentiellen Angreifer keine Möglichkeit zum Ausspähens des Geheimnisses des Datenträgers 10 zu bieten. Ist der für diesen Zähler vorgegebene Schwellenwert überschritten, so kann es vorgesehen sein, den Datenträger 10 zu sperren.

Auch im Zusammenhang mit den Bewertungsverfahren, die vorangegangene Authentisierungsanfragen und sonstige Kommandos mit einbeziehen, kann der Datenträger 10 gesperrt werden, wenn ein Angriff erkannt wird, um eine weitere Benutzung des Datenträgers 10 damit zu unterbinden. Eine Sperrung kann auch reversibel vorgesehen sein, beispielsweise als über die Luftschnittstelle wieder aufhebbar.

Der Datenträger 10 kann auch zeitweilig gesperrt werden. In diesem Fall werden alle Kommandos, die verschieden von Authentisierungsanfragen sind, wie gewöhnlich ausgeführt. Dies kann zur Folge haben, dass der Datenträger 10 nach einer gewissen Anzahl von ausgeführten sonstigen Kommandos wieder zur Authentisierung bereit und frei geschaltet ist, da die Regel, die das jeweilige Verhältnis von Authentisierungsanfragen zu sonstigen Kommandos betrifft, wieder einen zulässigen Wert ergibt. Die Zeitspanne, innerhalb derer auf eine Authentisierungsanfrage geantwortet wird, kann verlängert werden, um gewisse, vorstehend beschriebene Restriktionen über die erlaubte Anzahl von Authentisierungsanfragen innerhalb eines vorgegebenen Zeitintervalls wieder einzuhalten und somit die Anzahl von direkt oder nahe aufeinander folgenden Authentisierungsanfragen zu begrenzen.

Alternativ zur kompletten oder zeitweiligen Sperrung des Datenträgers 10, oder im dem Fall, in dem ein Angriff schon erkannt, aber noch keine Sperrung erfolgt ist, kann der Datenträger 10 im Fall eines erkannten Angriffs auf den Angriff nicht mit der korrekten Authentisierungsantwort, sondern mit einer verfälschten Antwort auf die Authentisierungsanfrage antworten. Auf diese Weise erhält der Angreifer Daten, die diesem das Extrahieren des geheimen Schlüssels des Datenträgers 10 unmöglich machen oder zumindest deutlich erschweren. Diese Strategie kann in Situationen, die einen Angriff wahrscheinlich erscheinen, aber nicht sicher feststellen lassen, in abgeschwächter Form eingesetzt werden. Dabei wird nicht auf jede Anfrage verfälscht geantwortet, sondern nur auf einen bestimmten Prozentsatz der Authentisierungsanfragen, der der Wahrscheinlichkeit, mit der ein Angriff vorliegt, angepasst werden kann. Ein korrektes Authentisieren bei dem Kommunikationssystem ist auf diese Weise dennoch gewährleistet, wenn auch nicht bei jeder Authendsierungsanfrage. Ein potentieller Abgriff wird gleichzeitig zumindest erschwert.

Wird im Schritt 400 die Authentisierungsanfrage nicht als Angriff bewertet ("no attack"), so antwortet der Datenträger in Schritt 510 darauf ("answer request"), beispielsweise wie vorstehend mit Bezug auf Schritt 200 beschrieben.

In Schritt 610 prüft dann die Kommunikationsvorrichtung die Antwort des Datenträgers 10 ("check answer") und der Datenträger 10 gilt als positiv authentisiert ("positive"), wenn die Antwort der von der Kommunikationsvorrichtung erwarteten Authentisierungsantwort entspricht. Mit Bezug auf Schritt 200 beispielsweise erfolgt diese Prüfung dadurch, dass die Werte SRES und SRES' auf Gleichheit verglichen und als gleich erkannt werden.

Verläuft die Authentisierung des portablen Datenträgers 10 gegenüber der Kommunikationsvorrichtung im Schritt 610 negativ ("negative"), wenn also beispielsweise SRES ≠ SRES' gilt, so kann die Kommunikationsvorrichtung in Schritt 710 ("not authenticated") eine neue Authentisierungsanfrage ("new request") an den Datenträger 10 senden, d.h. erneut nach Schritt 200 gehen, um dem Datenträger 10 im Fall eines erfolgten Datenübertragungsfehlers erneut die Möglichkeit zur Authentisierung zu geben. Die Anzahl der auf diese Weise ermöglichten erneuten Authentisierungsversuche ist vorzugsweise deutlich begrenzt. Bei Erreichen dieser Anzahl oder gänzlich ohne eine erneute Möglichkeit der Authentisierung für den Datenträger 10 bricht die Kommunikationsvorrichtung in Schritt 810 die Kommunikation zu dem Datenträger 10 ab ("abort communication").

Verläuft die Authentisierung des portablen Datenträgers 10 gegenüber der Kommunikationsvorrichtung im Schritt 610 positiv ("posizive"), wenn also beispielsweise SRES gleich SRES' gilt, so gilt der portable Datenträger 10 im Schritt 715 gegenüber dem Kommunikationssystem als positiv authentisiert ("authenticated") und die gewöhnliche Kommunikation zwischen dem Datenträger 10 und der Kommunikationsvorrichtung kann in Schritt 815 fortgesetzt werden ("continue communication").

## Patentansprüche

1. Verfahren zum Authentisieren eines portablen Datenträgers (10) gegenüber einer Kommunikationsvorrichtung, umfassend die Schritte:
- Empfangen (200) einer Authentisierungsanfrage als Kommando einer Kommunikationsvorrichtung durch den Datenträger (10);
- Bewerten (300) einer Vertrauenswürdigkeit der Authentisierungsanfrage durch den Datenträger (10); und
- Abweisen (400, 500) der Authentisierungsanfrage durch den Datenträger (10), falls die Authentisierungsanfrage als nicht vertrauenswürdig bewertet wird, und Senden (400, 510) einer Authentisierungsantwort auf die Authentisierungsanfrage an die Kommunikationsvorrichtung andernfalls;
**dadurch gekennzeichnet, dass** die Vertrauenswürdigkeit der Authentisierungsanfrage anhand einer aus von dem Datenträger (10) empfangenen Kommandos abgeleiteten Relationsinformation und einer von dem Datenträger (10) empfangenen Identifikationsinformation der Kommunikationsvorrichtung bewertet wird, wobei die Identifikationsinformation aus der Authentisierungsanfrage extrahiert wird und anhand der extrahierten Identifikationsinformation eine Identität der Kommunikationsvorrichtung geprüft wird, und wobei in die Relationsinformation die Anzahl derjenigen Authentisierungsanfragen eingeht, bei denen das Prüfen der Identität der Kommunikationsvorrichtung, von der die jeweilige Authentisierungsanfrage empfangen wurde, nicht erfolgreich war, und wobei in die Relationsinformation eine Information bezüglich derjenigen von dem Datenträger (10) empfangenen Kommandos eingeht, die keine Authentisierungsanfragen repräsentieren.

2. Verfahren gemäß Anspruch 1, **dadurch gekennzeichnet, dass** aus der Authentisierungsanfrage ein dem Datenträger (10) und der Kommunikationsvorrichtung gemeinsam bekanntes verschlüsseltes Geheimnis als Identifikationsinformation extrahiert wird.

3. Verfahren gemäß einem der Ansprüche 1 bis 2, **dadurch gekennzeichnet, dass** in die Relationsinformation eine zeitliche Information eingeht.

4. Verfahren gemäß Anspruch 3, **dadurch gekennzeichnet, dass** die Relationsinformation ein Zeitintervall im Verhältnis zu den in dem Zeitintervall von dem Datenträger (10) empfangenen Authentisierungsanfragen repräsentiert.

5. Verfahren gemäß Anspruch 3, **dadurch gekennzeichnet, dass** die Relationsinformation eine Anzahl der von dem Datenträger (10) empfangenen Authentisierungsanfragen im Verhältnis zu einem vorgegebenen Zeitintervall repräsentiert.

6. Verfahren gemäß einem der Ansprüche 1 bis 5, **dadurch gekennzeichnet, dass** die Relationsinformation eine Anzahl der von dem Datenträger (10) empfangenen Authentisierungsanfragen im Verhältnis zu der Anzahl aller von dem Datenträger (10) empfangenen Kommandos betrifft.

7. Portabler Datenträger (10), umfassend eine Kommunikationsschnittstelle (30), einen Speicher (60) und eine Bewertungseinrichtung (65), wobei die Bewertungseinrichtung (65) eingerichtet ist, eine Vertrauenswürdigkeit einer über die Kommunikationsschnittstelle (30) als Kommando einer Kommunikationsvorrichtung empfangenen Authentisierungsanfrage zu bewerten sowie die Authentisierungsanfrage abzuweisen, falls die Authentisierungsanfrage als nicht vertrauenswürdig bewertet wird, und andernfalls eine Authentisierungsantwort auf die Authentisierungsanfrage an die Kommunikationsvorrichtung zu senden, **dadurch gekennzeichnet, dass** die Bewertungseinrichtung (65) eingerichtet ist, die Vertrauenswürdigkeit der Authentisierungsanfrage anhand einer aus über die Kommunikationsschnittstelle (30) empfangenen Kommandos abgeleiteten Relationsinformation und einer empfangenen Identifikationsinformation der Kommunikationsvorrichtung zu bewerten, wobei die Bewertungseinrichtung (65) eingerichtet ist, Anfrageinformationen (70) in dem Speicher (60) zu speichern, die empfangene Kommandos betreffen, und daraus eine Relationsinformation abzuleiten und eingerichtet ist, die Identifikationsinformation aus der Authentisierungsanfrage zu extrahieren und anhand der extrahierten Identifikationsinformation eine Identität einer Kommunikationsvorrichtung zu prüfen, von der die Authentisierungsanfrage empfangen wurde, und wobei die Bewertungseinrichtung (65) eingerichtet ist, als Anfrageinformationen (70) die Anzahl derjenigen Authentisierungsanfragen in dem Speicher (60) zu speichern, bei denen die Prüfung der Identität der Kommunikationsvorrichtung, von der die jeweilige Authentisierungsanfrage empfangen wurde, nicht erfolgreich war, und wobei die Bewertungseinrichtung (65) eingerichtet ist, als Anfrageinformation (70) eine Information bezüglich derjenigen empfangenen Kommandos in dem Speicher (60) zu speichern, die keine Authentisierungsanfragen repräsentieren.

8. Portabler Datenträger (10) gemäß Anspruch 7, **dadurch gekennzeichnet, dass** die Bewertungseinrichtung (65) eingerichtet ist, die Identität der Kommunikationsvorrichtung, von der die Authentisierungsanfrage empfangen wurde, durch Entschlüsseln eines in der Identifikationsinformation in verschlüsselter Form integrierten, dem Datenträger (10) und der Kommunikationsvorrichtung gemeinsam bekannten Geheimnisses zu prüfen.

9. Portabler Datenträger (10) gemäß einem der Ansprüche 7 oder 8, **gekennzeichnet durch** eine Zeitmesseinrichtung (80), wobei die Bewertungseinrichtung (65) eingerichtet ist, mittels der Zeitmesseinrichtung (80) eine die Authentisierungsanfragen betreffende zeitliche Information zu ermitteln und als Anfrageinformation (70) in dem Speicher (60) zu speichern.

10. Portabler Datenträger (10) gemäß Anspruch 9, **dadurch gekennzeichnet, dass** die Anfrageinformation (70) als zeitliche Information einen Zeitraum zwischen zwei aufeinander folgenden, über die Kommunikationsschnittstelle empfangenen Authentisierungsanfragen betrifft.

11. Portabler Datenträger (10) gemäß Anspruch 9 oder 10, **dadurch gekennzeichnet, dass** die Anfrageinformation (70) als zeitliche Information eine Anzahl von innerhalb eines Zeitintervalls über die Kommunikationsschnittstelle (30) empfangenen Authentisierungsanfragen betrifft.

12. Portabler Datenträger (10) gemäß einem der Ansprüche 7 bis 11, **dadurch gekennzeichnet, dass** die Bewertungseinrichtung (65) eingerichtet ist, die Authentisierungsanfrage anhand einer aus der Anfrageinformation (70) abgeleiteten Relationsinformation zu bewerten, die eine Anzahl der über die Kommunikationsschnittstelle (30) empfangenen Authentisierungsanfragen im Verhältnis zu der Anzahl aller empfangenen Kommandos betrifft.

## Claims

1. A method for authenticating a portable data carrier (10) to a communication apparatus, comprising the steps of:
- receiving (200) by the data carrier (10) an authentication request as a command of a communication apparatus;
- evaluating (300) by the data carrier (10) a trustworthiness of the authentication request; and
- rejecting (400, 500) by the data carrier (10) the authentication request, if the authentication request is evaluated as non-trustworthy, and otherwise sending (400, 510) an authentication response to the authentication request to the communication apparatus;
**characterized in that** the trustworthiness of the authentication request is evaluated by means of relation information derived from the commands received by the data carrier (10) and identification information of the communication apparatus received by the data carrier (10), wherein the identification information is extracted from the authentication request and an identity of the communication apparatus is checked by means of the extracted identification information, and wherein the number of those authentication requests is incorporated into the relation information where the check of the identity of the communication apparatus from which the respective authentication request was received was unsuccessful, and wherein information relating to those commands received by the data carrier (10) is incorporated into the relation information which do not represent authentication requests.

2. The method according to claim 1, **characterized in that** from the authentication request an encrypted secret which is jointly known to the data carrier (10) and the communication apparatus is extracted as identification information.

3. The method according to any of the claims 1 to 2, **characterized in that** time information is incorporated into the relation information.

4. The method according to claim 3, **characterized in that** the relation information represents a time interval in relation to the authentication requests received by the data carrier (10) within the time interval.

5. The method according to claim 3, **characterized in that** the relation information represents a number of the authentication requests received by the data carrier (10) in relation to a predetermined time interval.

6. The method according to any of the claims 1 to 5, **characterized in that** the relation information concerns a number of authentication requests received by the data carrier (10) in relation to the number of all commands received by the data carrier (10).

7. A portable data carrier (10), comprising a communication interface (30), a memory (60) and an evaluation device (65), wherein the evaluation device (65) is adapted to evaluate a trustworthiness of an authentication request received via the communication interface (30) as a command of a communication apparatus, and to reject the authentication request, if the authentication request is evaluated as non-trustworthy, and otherwise to send an authentication response to the authentication request to the communication apparatus, **characterized in that** the evaluation device (65) is adapted to evaluate the trustworthiness of the authentication request by means of relation information derived from commands received via the communication interface (30) and received identification information of the communication apparatus, wherein the evaluation device (65) is adapted to store in the memory (60) request information (70) concerning received commands, and to derive relation information therefrom, and is adapted to extract the identification information from the authentication request and to check, by means of the extracted identification information, an identity of a communication apparatus from which the authentication request was received, and wherein the evaluation device (65) is adapted to store in the memory (60) as request information (70) the number of those authentication requests where the check of the identity of the communication apparatus from which the respective authentication request was received was unsuccessful, and wherein the evaluation device (65) is adapted to store in the memory (60) as request information (70) information relating to those received commands which do not represent authentication requests.

8. The portable data carrier (10) according to claim 7, **characterized in that** the evaluation device (65) is adapted to check the identity of the communication apparatus from which the authentication request was received by decrypting a secret that is integrated in the identification information in encrypted form and is jointly known to the data carrier (10) and the communication apparatus.

9. The portable data carrier (10) according to any of the claims 7 or 8, **characterized by** a time measuring device (80), wherein the evaluation device (65) is adapted to ascertain, by means of the time measuring device (80), time information concerning the authentication requests and to store it in the memory (60) as request information (70).

10. The portable data carrier (10) according to claim 9, **characterized in that** the request information (70) as time information concerns a time period between two consecutive authentication requests received via the communication interface.

11. The portable data carrier (10) according to claim 9 or 10, **characterized in that** the request information (70) as time information concerns a number of authentication requests received via the communication interface (30) within a time interval.

12. The portable data carrier (10) according to any of the claims 7 to 11, **characterized in that** the evaluation device (65) is adapted to evaluate the authentication request by means of relation information derived from the request information (70), with the relation information concerning a number of the authentication requests received via the communication interface (30) in relation to the number of all commands received.

## Revendications

1. Procédé d'authentification d'un support de données (10) portable vis-à-vis d'un dispositif de communication, comprenant les étapes:
- réception (200) d'une demande d'authentification en tant que commande d'un dispositif de communication par le support de données (10);
- évaluation (300) d'une fiabilité de la demande d'authentification par le support de données (10); et
- rejet (400, 500) de la demande d'authentification par le support de données (10) si la demande d'authentification est évaluée en tant que non fiable, et envoi (400, 510), au dispositif de communication, d'une réponse d'authentification à la demande d'authentification dans le cas contraire ;
**caractérisé en ce que** la fiabilité de la demande d'authentification est évaluée au moyen d'une information de relation dérivée de commandes reçues par le support de données (10) et d'une information d'identification du dispositif de communication reçue par le support de données (10), l'information d'identification étant extraite de la demande d'authentification et une identité du dispositif de communication étant vérifiée au moyen de l'information d'identification extraite, et le nombre des demandes d'authentification dans le cas desquelles la vérification de l'identité du dispositif de communication en provenance duquel la demande d'authentification respective a été reçue n'a pas abouti entrant en compte dans l'information de relation, et une information concernant les commandes reçues par le support de données (10) qui ne représentent pas de demandes d'authentification entrant en compte dans l'information de relation.

2. Procédé selon la revendication 1, **caractérisé en ce que**, de la demande d'authentification, il est extrait en tant qu'information d'identification un secret crypté connu à la fois par le support de données (10) et par le dispositif de communication.

3. Procédé selon une des revendications de 1 à 2, **caractérisé en ce que**, dans l'information de relation, une information temporelle entre en compte.

4. Procédé selon la revendication 3, **caractérisé en ce que** l'information de relation représente un intervalle de temps par rapport aux demandes d'authentification reçues par le support de données (10) dans l'intervalle de temps.

5. Procédé selon la revendication 3, **caractérisé en ce que** l'information de relation représente un nombre des demandes d'authentification reçues par le support de données (10) par rapport à un intervalle de temps prédéterminé.

6. Procédé selon une des revendications de 1 à 5, **caractérisé en ce que** l'information de relation concerne un nombre des demandes d'authentification reçues par le support de données (10) par rapport au nombre de toutes les commandes reçues par le support de données (10).

7. Support de données (10) portable, comprenant une interface de communication (30), une mémoire (60) et un équipement d'évaluation (65), l'équipement d'évaluation (65) étant configuré pour évaluer une fiabilité d'une demande d'authentification reçue par l'intermédiaire de l'interface de communication (30) en tant que commande d'un dispositif de communication ainsi que pour rejeter la demande d'authentification dans le cas où la demande d'authentification est évaluée en tant que non fiable, et pour, dans le cas contraire, envoyer au dispositif de communication une réponse d'authentification à la demande d'authentification, **caractérisé en ce que** l'équipement d'évaluation (65) est configuré pour évaluer la fiabilité de la demande d'authentification au moyen d'une information de relation dérivée de commandes reçues par l'intermédiaire de l'interface de communication (30) et d'une information d'identification du dispositif de communication reçue, l'équipement d'évaluation (65) étant configuré pour mémoriser dans la mémoire (60) des informations de demande (70) qui concernent des commandes reçues et pour en dériver une information de relation et est configuré pour extraire de la demande d'authentification l'information d'identification et pour, au moyen de l'information d'identification extraite, vérifier une identité d'un dispositif de communication en provenance duquel la demande d'authentification a été reçue, et l'équipement d'évaluation (65) étant configuré pour mémoriser dans la mémoire (60) en tant qu'informations de demande (70) le nombre des demandes d'authentification dans le cas desquelles la vérification de l'identité du dispositif de communication en provenance duquel la demande d'authentification respective a été reçue n'a pas abouti, et l'équipement d'évaluation (65) étant configuré pour mémoriser dans la mémoire (60) en tant qu'information de demande (70) une information concernant les commandes reçues qui ne représentent pas de demandes d'authentification.

8. Support de données (10) portable selon la revendication 7, **caractérisé en ce que** l'équipement d'évaluation (65) est configuré pour vérifier l'identité du dispositif de communication en provenance duquel la demande d'authentification respective a été reçue, en décryptant un secret intégré sous forme cryptée dans l'information d'identification, connu à la fois par le support de données (10) et par le dispositif de communication.

9. Support de données (10) portable selon une des revendications 7 ou 8, **caractérisé par** un équipement de compteur de temps (80), l'équipement d'évaluation (65) étant configuré pour, au moyen de l'équipement de compteur de temps (80), repérer une information temporelle concernant les demandes d'authentification et la mémoriser dans la mémoire (60) en tant qu'information de demande (70).

10. Support de données (10) portable selon la revendication 9, **caractérisé en ce que** l'information de demande (70) concerne en tant qu'information temporelle un laps de temps compris entre deux demandes d'authentification se succédant reçues par l'intermédiaire de l'interface de communication.

11. Support de données (10) portable selon la revendication 9 ou 10, **caractérisé en ce que** l'information de demande (70) concerne en tant qu'information temporelle un nombre de demandes d'authentification reçues à l'intérieur d'un intervalle de temps par l'intermédiaire de l'interface de communication (30).

12. Support de données (10) portable selon une des revendications de 7 à 11, **caractérisé en ce que** l'équipement d'évaluation (65) est configuré pour évaluer la demande d'authentification au moyen d'une information de relation qui est dérivée de l'information de demande (70) et qui concerne un nombre des demandes d'authentification reçues par l'intermédiaire de l'interface de communication (30) par rapport au nombre de toutes les commandes reçues.
